# EUROPEAN PATENT SPECIFICATION

(11) **EP 4 257 403 B1**
(45) Date of publication and mention of the grant of the patent: **24.07.2024**
(21) Application number: 23155427.0
(22) Date of filing: 07.02.2023
(51) Int. Cl.: B60K 35/00

(54) **AUTOMOTIVE DISPLAY**
ANZEIGE FÜR KRAFTFAHRZEUGE
DISPOSITIF D'AFFICHAGE POUR VÉHICULE AUTOMOBILE

(30) Priority: 16.03.2022 JP 2022041591
(43) Date of publication of application: 11.10.2023
(73) Proprietor: Suzuki Motor Corporation, Hamamatsu-shi, Shizuoka 432-8611 (JP)
(72) Inventor: SUNDA, Takashi, Hamamatsu-shi, Shizuoka, 432-8611 (JP); ISHIDO, Masazumi, Hamamatsu-shi, Shizuoka, 432-8611 (JP); OGI, Risako, Hamamatsu-shi, Shizuoka, 432-8611 (JP); OTA, Honoka, Hamamatsu-shi, Shizuoka, 432-8611 (JP); UCHIUMI, Sumihiko, Hamamatsu-shi, Shizuoka, 432-8611 (JP)
(74) Representative: Haseltine Lake Kempner LLP

(56) References cited:
- EP-A1- 3 372 435
- EP-B1- 2 930 049
- DE-A1- 10 360 657
- US-A1- 2017 024 106

## Description

### [Technical Field]

The present invention relates to an automotive display.

### [Background Art]

JP 2019 125053 A discloses a technique in which a display control unit causes an image to be displayed in an enlarged manner in an enlarged divided region D1 and causes an image at a specific part SE of the other divided regions D2 to D4 to be displayed in an enlarged manner in the other divided regions which are disposed in a manner reduced in size by a size reducing disposition unit once an operation of enlarging the divided region D1 on the display screen is performed on a touch panel in order to reduce difficulty in viewing image display on the other divided regions reduced in size in response to the enlargement of one of the plurality of divided regions on the display screen. Further relevant prior art is known from EP 3 372 435 A1, US 2017/024106 A1, DE 103 60 657 A1 and EP 2 930 049 B1.

### [Summary of Invention]

### [Problem to be Solved by the Invention]

In view of a requirement for an automotive display device with enhanced user convenience, an object of the present invention is to provide such an automotive display device.

### [Means for Solving the Problem]

An automotive display according to the present invention is an automotive display which has a plurality of available functions and is able to perform switching between a home screen and an individual screen, in which the plurality of functions include a first function group and a second function group, a first button group including a plurality of buttons respectively corresponding to a plurality of functions included in the first function group is displayed on the home screen, and if any of the plurality of buttons included in the first button group is operated, switching to the individual screen including a detailed display region of a function corresponding to the button is performed, a plurality of simple display regions respectively corresponding to a plurality of functions included in the second function group are further displayed on the home screen, and a switching button for performing switching to the individual screen including a detailed display region of the function is displayed in each of the plurality of simple display regions, the detailed display region, a home button for performing switching to the home screen, the first button group, and a second button group including a plurality of buttons respectively corresponding to a plurality of functions included in the second function group are displayed on the individual screen, and if any of the plurality of buttons included in the second button group is operated, switching to the individual screen including a detailed display region of a function corresponding to the button is performed, the number and sizes of the plurality of simple display regions displayed on the home screen and a function corresponding to each simple display region are able to be selectively designated, and a ratio of sizes of the plurality of buttons included in the second button group displayed on the individual screen is the same as a ratio of sizes of the plurality of simple display regions displayed on the home screen.

### [Advantageous Effect of Invention]

According to the present invention, it is possible to further enhance convenience for a user. Specifically, the user can recognize, on the individual screen, the configuration of the home screen and the size ratio of the simple display regions and easily determine to which of the individual screen for another function and the home screen switching has to be performed from the individual screen for a certain function.

### [Brief Description of Drawings]

[Figure 1] Figure 1 is an explanatory diagram illustrating a first example of a home screen.
[Figure 2] Figure 2 is an explanatory diagram illustrating a first example of an individual screen.
[Figure 3] Figure 3 is an explanatory diagram illustrating a second example of an individual screen.
[Figure 4] Figure 4 is an explanatory diagram illustrating a second example of the home screen.
[Figure 5] Figure 5 is an explanatory diagram illustrating a third example of an individual screen.
[Figure 6] Figure 6 is an explanatory diagram illustrating a third example of the home screen.
[Figure 7] Figure 7 is an explanatory diagram illustrating a fourth example of an individual screen.
[Figure 8] Figure 8 is an explanatory diagram illustrating a fifth example of an individual screen.
[Figure 9] Figure 9 is an explanatory diagram illustrating an example of a computer hardware configuration of an automotive display.
[Figure 10] Figure 10 is an explanatory diagram illustrating an example of a software configuration of the automotive display.

### [Mode for Carrying Out the Invention]

Hereinafter, the present invention will be described on the basis of illustrated embodiments. However, the present invention is not limited to the embodiments described below.

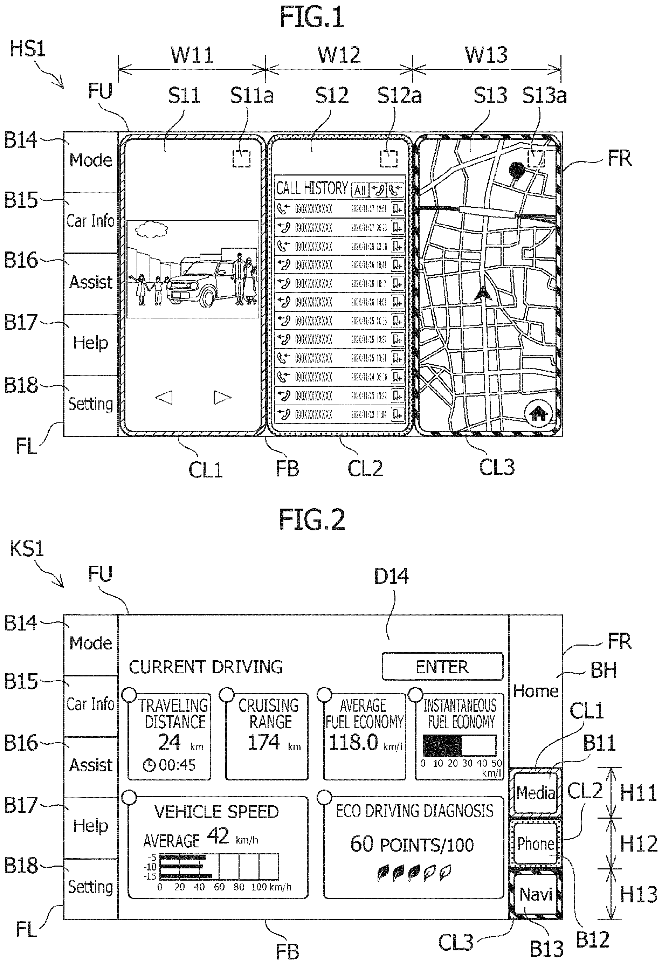

Figure 1 illustrates a home screen HS1 displayed on an automotive display of a touch panel type provided in a vehicle interior of an automobile. The automotive display has a horizontally long quadrangular shape and has an upper side FU, a lower side FB, a left side FL, and a right side FR.

Three simple display regions S11, S12, and S13 with substantially vertically long quadrangular shapes and with substantially the same dimensions are provided in the home screen HS1. The dimensions of the regions S11, S12, and S13 in the up-down direction are similar to the dimension of the home screen HS1 in the up-down direction. Also, the dimension W 11 of the region S11 in the left-right direction, the dimension W12 of the region S 12 in the left-right direction, and the dimension W13 of the region S13 in the left-right direction are similar to each other. The left side of the region S11 is located with a space from the left side FL of the automotive display. The right side of the region S11 and the left side of the region S12 are in contact with each other, and the right side of the region S12 and the left side of the region S13 are in contact with each other. The right side of the region S13 is in contact with the right side FR of the automotive display.

The region S11 is a region where a menu for media functions of displaying and operating media such as audio and radio is displayed.

The region S12 is a region where a menu for telephone functions is displayed. For example, a keypad for calls and a call history are displayed.

The region S13 is a region where a menu for car navigation functions, such as display of a current position of the automobile and display of a route to a destination, is displayed.

A switching button S11a is displayed at an upper right corner of the region S11. If the switching button S11a is pressed, then the screen is switched to a detailed display screen of the media functions. Similarly, a switching button S12a for switching to a detailed display screen for the telephone functions is displayed at the upper right corner of the region S12, and a switching button S13a for switching to a detailed display screen for the car navigation functions is displayed at the upper right corner of the region S13. The detailed display screens will be described later.

Five buttons B14 to B18 with substantially square shapes and substantially the same dimensions are further displayed on the home screen HS1. These five buttons can be collectively referred to as a first button group. The five buttons B14 to B18 are aligned in order without clearances from the upper side to the lower side of the screen. The upper side of the button B14 is in contact with the upper side FU of the automotive display, and the lower side of the button B18 is in contact with the lower side FB of the automotive display. Each of the left sides of the five buttons B14 to B18 is in contact with the left side FL of the automotive display. Each of the right sides of the five buttons B14 to B18 is in contact with the left side of the region S11.

If the button B14 with letters "Mode" written thereon is pressed, an individual screen for switching a traveling mode of the vehicle is displayed. For example, there is a mode for assisting safety at the time of traveling, a mode for keeping an engine rotation speed high to be suitable for traveling along a mountain road or merging onto a road at a high speed, a mode for obtaining an appropriate driving force at a snowy road or the like, and a mode for distributing a driving force to gripped wheels at the time of escaping from mud or the like.

If the button B15 with letters "Car Info" written thereon is pressed, an individual screen in regard to information checking functions with which it is possible to check a traveling distance, a cruising range, average fuel economy, instantaneous fuel economy, an average vehicle speed, and the like is displayed.

If the button B16 with letters "Assist" written thereon is pressed, an individual screen with functions with which it is possible to set ON and OFF of an advanced driver assistance system (ADAS) function and to check a function of the ADAS that is currently operating is displayed.

If the button B17 with letters "Help" written thereon is pressed, an individual screen for functions of guiding operation methods that are difficult to understand and content of setting is displayed.

If the button B18 with letters "Setting" written thereon is pressed, a menu screen for performing various kinds of setting is displayed.

If the button B15 on the home screen HS1 illustrated in Figure 1 is pressed, the screen is switched to an individual screen KS1 illustrated in Figure 2. The buttons B 14 to B18 are displayed on the individual screen KS1 similarly to the home screen HS1. A detailed display region D14 that occupies a large part of the individual screen KS1 and four buttons BH, B11, B12, and B13 are further displayed on the individual screen KS1.

The detailed display region D14 has a substantially horizontally long quadrangular shape, and the upper side and the lower side thereof are in contact with the upper side FU and the lower side FB of the automotive display, respectively. The right sides of the five buttons B14 to B18 are in contact with the left side of the detailed display region D14. The right side of the detailed display region D14 is located with a space from the right side FR of the automotive display.

The button BH, the button B11, the button B12, and the button B13 are aligned with no clearance, in order, from the upper side to the lower side of the screen. The button BH has a substantially vertically long quadrangular shape, the upper side thereof is in contact with the upper side FU of the automotive display, the left side thereof is in contact with the right side of the detailed display region D14, and the right side thereof is in contact with the right side FR of the automotive display.

All the three buttons B 1 1, B12, and B13 have substantially square shapes and substantially the same dimensions. Each left side thereof is in contact with the right side of the detailed display region D14, and each right side thereof is in contact with the right side FR of the automotive display. The dimension H1 1 of the button B11 in the up-down direction, the dimension H12 of the button B12 in the up-down direction, and the dimension H13 of the button B 13 in the up-down direction are similar to each other.

The three buttons B11 to B13 can be collectively referred to as a second button group.

If the button BH with letters "Home" written thereon is pressed, the screen is switched to the home screen HS1 illustrated in Figure 1.

If the button B11 with letters "Media" written thereon is pressed, the screen is switched to a menu screen for displaying and operating media, such as audio or radio.

If the button B12 with letters "Phone" written thereon is pressed, the screen is switched to a menu screen for telephone functions.

If the button B13 with letters "Navi" written thereon is pressed, the screen is switched to a menu screen for car navigation functions such as display of a current position of the automobile and display of a route to a destination.

In this manner, the region S11 in Figure 1 and the button B11 in Figure 2 correspond to the media functions, the region S12 in Figure 1 and the button B12 in Figure 2 correspond to the telephone functions, and the region S13 in Figure 1 and the button B13 in Figure 2 correspond to the car navigation function. Additionally, the widths of the regions S11, S12, and S13 satisfy 1:1:1 in Figure 1, and correspondingly, the heights of the buttons B11, B12, and B13 satisfy 1:1:1 in Figure 2.

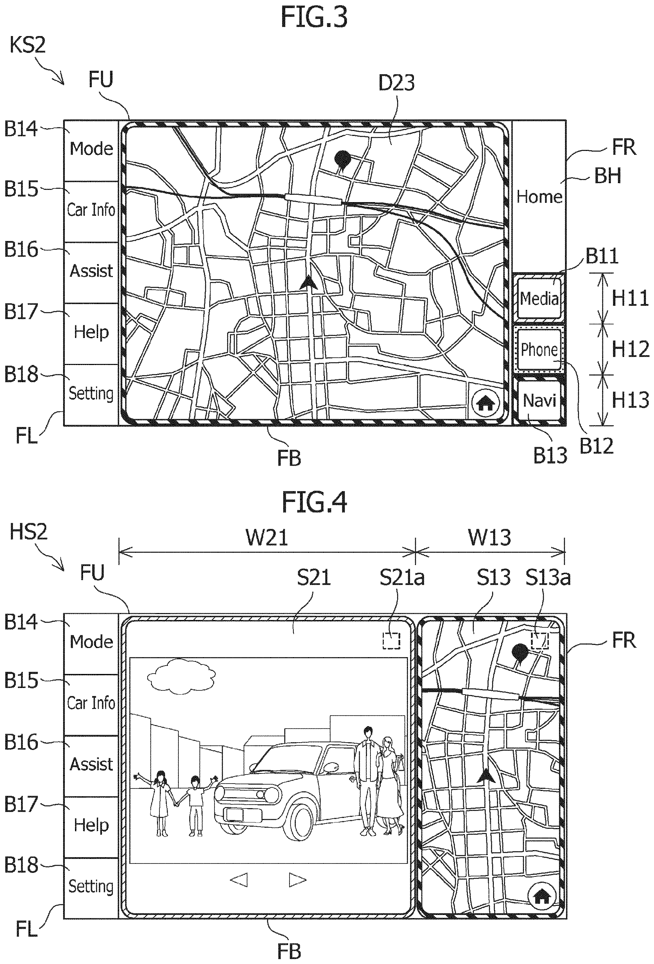

If the switching button S13a illustrated in Figure 1 or the button B13 illustrated in Figure 2 is pressed, the screen is switched to an individual screen KS2 illustrated in Figure 3. On the individual screen KS2, the buttons BH and B11 to B18 are displayed similarly to the individual screen KS1 illustrated in Figure 2. Furthermore, a region D23 is displayed on the individual screen KS2 in Figure 3 instead of the region D14 on the individual screen KS1 illustrated in Figure 2. The region D23 is a detailed display region for the car navigation functions.

Figure 4 illustrates another home screen HS2. The region S13 and the buttons B14 to B18 are displayed on the home screen HS2 similarly to the home screen HS1 illustrated in Figure 1. On the other hand, a simple display region S21 is displayed instead of the regions S11 and S12 on the home screen HS1 illustrated in Figure 1. The region S21 has a quadrangular shape, and the upper side and the lower side thereof are in contact with the upper side FU and the lower side FB of the automotive display, respectively. Also, the right sides of the buttons B14 to B18 are in contact with the left side of the region S21, and the right side of the region S21 is in contact with the left side of the region S13. The dimension W21 of the region S21 in the left-right direction is about double the dimension W13 of the region S13 in the left-right direction. A switching button S21a is displayed at the upper right corner of the region S21.

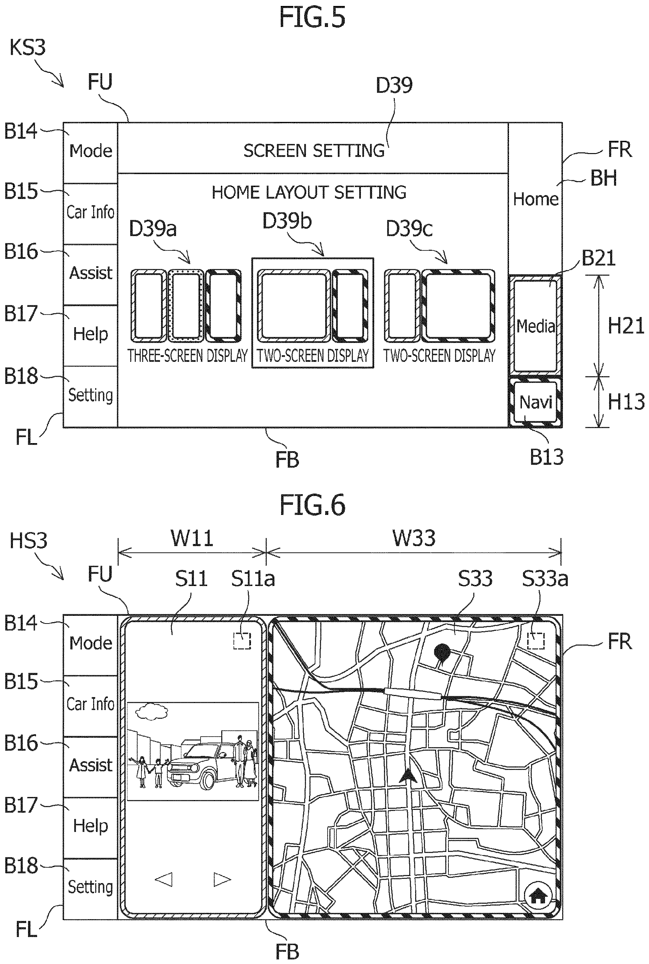

If the button B18 on the home screen HS2 illustrated in Figure 4 is pressed, the screen is switched to an individual screen KS3 illustrated in Figure 5. The buttons B14 to B18 are displayed on the individual screen KS3 similarly to the home screen HS2. The home button BH and the button B13 are further displayed on the individual screen KS3 similarly to the individual screen KS1 illustrated in Figure 2.

Additionally, a region D39 with a horizontally long quadrangular shape is displayed on the individual screen KS3 instead of the region D14 in Figure 2. The region D39 is a region for setting the home screen. In this region, three icons D39a, D39b, and D39c are displayed in order from the left side to the right side. If the icon D39a is pressed, setting is performed such that three simple display regions with the same dimensions are displayed with the three regions laterally aligned on the home screen. In other words, if the icon D39a is pressed, layout setting in the home screen becomes layout setting as in the home HS1 illustrated in Figure 1. If the icon D39b is pressed, setting is performed such that two simple display regions with different dimensions are laterally aligned on the home screen and the larger simple display region is displayed on the left side of the smaller simple display region. The outermost frame of the icon D39b indicates that the setting is the current setting. If the icon D39c is pressed, setting is performed such that two simple display regions with different dimensions are laterally aligned on the home screen and the larger simple display region is displayed on the right side of the smaller simple display region.

A button B21 with a substantially vertically long quadrangular shape is also displayed on the individual screen KS3. The button B21 has the upper side that is in contact with the lower side of the home button BH, the lower side that is in contact with the upper side of the button B13, the left side that is in contact with the right side of the region D39, and the right side that is in contact with the right side FR of the automotive display.

In this manner, the region S21 in Figure 4 and the button B21 in Figure 5 correspond to the media functions, and the region S13 in Figure 4 and the button B13 in Figure 5 correspond to the car navigation functions. Also, the widths of the regions S21 and S13 satisfy 2:1 in Figure 4, and correspondingly, the heights of the buttons B21 and B13 satisfy 2:1 in Figure 5.

If the icon D39c in Figure 5 is pressed, layout setting in the home screen becomes the setting as in the home screen HS3 in Figure 6. The region S11 and the buttons B14 to B18 are displayed on the home screen HS3 similarly to the home screen HS1 illustrated in Figure 1. On the other hand, a simple display region S33 is displayed instead of the regions S12 and S13 on the home screen HS1 illustrated in Figure 1. The region S33 has a quadrangular shape and has an upper side and a lower side that are in contact with the upper side FU and the lower side FB of the automotive display, respectively. Also, the region S33 has a left side that is in contact with the right side of the region S11 and a right side that is in contact with the right side FR of the automotive display. The dimension W33 of the region S33 in the left-right direction is about double the dimension W11 of the region S11 in the left-right direction. A switching button S33a is displayed at the upper right corner of the region S33.

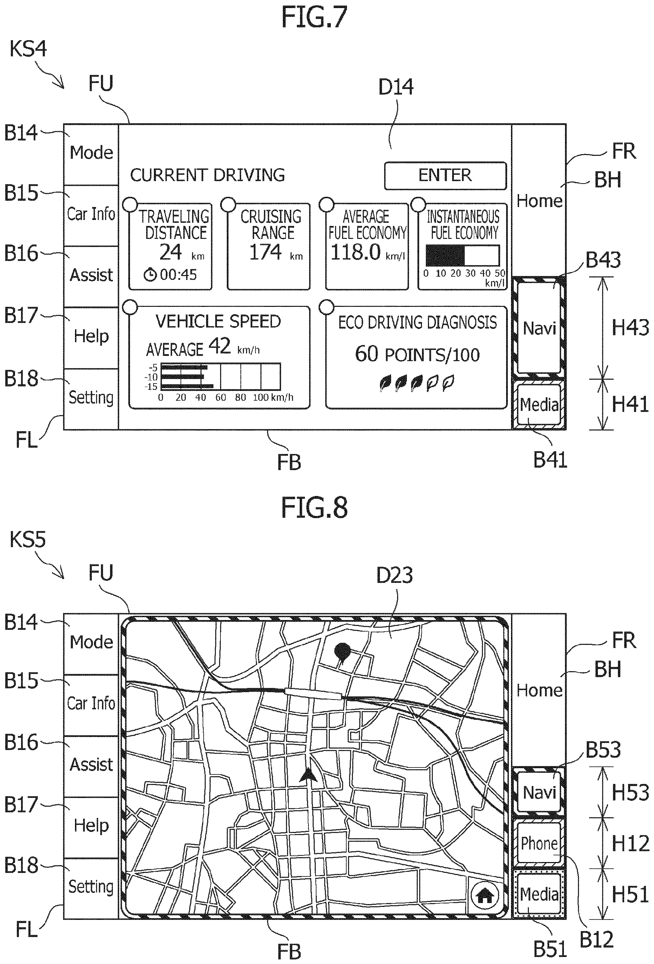

If the button B15 on the home screen HS3 illustrated in Figure 6 is pressed, the screen is switched to an individual screen KS4 illustrated in Figure 7. The buttons B14 to B18, the detailed display region D14, and the home button BH are displayed on the individual screen KS4 similarly to the individual screen KS1 illustrated in Figure 2. Furthermore, buttons B43 and B41 are displayed on the individual screen KS4 instead of the buttons B11 to B13 on the individual screen KS1 illustrated in Figure 2. The button B43 has a vertically long quadrangular shape and has an upper side that is in contact with the lower side of the home button BH, a left side that is in contact with the right side of the region D14, and a right side that is in contact with the right side FR of the automotive display. The button B41 has an upper side that is in contact with the lower side of the button B43, a lower side that is in contact with the lower side FB of the automotive display, a left side that is in contact with the right side of the region D14, and a right side that is in contact with the right side FR of the automotive display. The height H43 of the button B43 is about double the height H41 of the button B41.

In this manner, the region S33 in Figure 6 and the button B43 in Figure 7 correspond to the car navigation functions, and the region S11 in Figure 6 and the button B41 in Figure 7 correspond to the media functions. Also, the widths of the regions S33 and S11 satisfy 2:1 in Figure 6, and correspondingly, the heights of the buttons B43 and B41 satisfy 2:1 in Figure 7.

Alternatively, if the switching button S13a on the individual screen HS1 illustrated in Figure 1 is pressed, the screen may be switched to an individual screen KS5 illustrated in Figure 8 rather than the individual screen KS2 illustrated in Figure 3. The buttons BH, B12, and B14 to B18 and the region D23 are displayed on the individual screen KS5 similarly to the individual screen KS2 illustrated in Figure 3. Furthermore, buttons B53 and B51 are displayed instead of the buttons B11 and B13 in Figure 3. The button B53 has an upper side that is in contact with the lower side of the button BH, a lower side that is in contact with the upper side of the button B12, a left side that is in contact with the right side of the region D23, and a right side that is in contact with the right side FR of the automotive display. The button B51 has an upper side that is in contact with the lower side of the button B12, a lower side that is in contact with the lower side FB of the automotive display, a left side that is in contact with the right side of the region D23, and a right side that is in contact with the right side FR of the automotive display.

In this manner, the region S11 in Figure 1 and the button B51 in Figure 8 correspond to the media functions, the region S12 in Figure 1 and the button B12 in Figure 8 correspond to the telephone functions, and the region S13 in Figure 1 and the button B53 in Figure 8 correspond to the car navigation functions. Also, the widths of the regions S13, S12, and S11 satisfy 1:1:1 in Figure 1, and correspondingly, the heights of the buttons B53, B12, and B51 satisfy 1:1:1 in Figure 8.

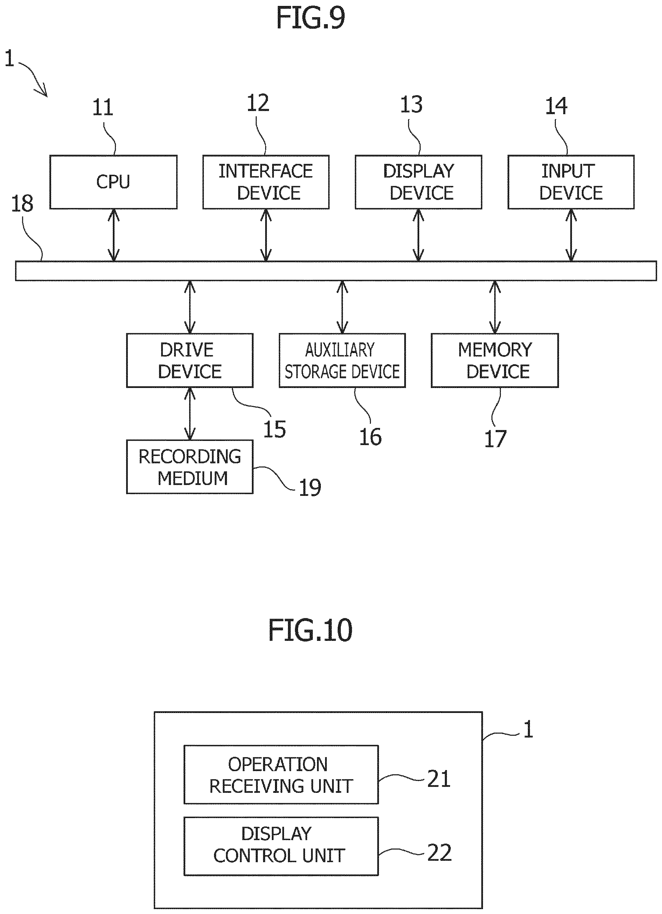

Figure 9 illustrates a computer hardware configuration example of the automotive display 1. The automotive display 1 includes a CPU 11, an interface device 12, a display device 13, an input device 14, a drive device 15, an auxiliary storage device 16, and a memory device 17, and these are connected to each other via a bus 18.

A program that realizes the functions of the automotive display 1 is provided by a recording medium 19 such as a CD-ROM. If the recording medium 19 recording the program is set in the drive device 15, the program is installed in the auxiliary storage device 16 from the recording medium 19 via the drive device 15. Alternatively, the installation of the program is not necessarily performed using the recording medium 19 and can also be performed through a network. The auxiliary storage device 16 stores the installed program and stores necessary files, data, and the like.

The memory device 17 reads the program from the auxiliary storage device 16 and stores the program in a case in which an instruction for activating the program is provided. The CPU 11 realizes the functions of the automotive display 1 in accordance with the program stored in the memory device 17. The interface device 12 is used as an interface for establishing connection to another computer through a network. The display device 13 displays a graphical user interface (GUI) or the like based on the program. An example of the GUI is as described above with reference to Figures 1 to 8. The input device 14 is a touch panel or the like.

Figure 10 illustrates a configuration example of software functions of an automobile display 1. The automobile display 1 includes an operation receiving unit 21 that receives user operations and a display control unit 22 that controls display on the screen in accordance with the operations received by the operation receiving unit 21. The screens illustrated in Figures 1 to 8 are displayed in a display region on such an automobile display 1.

The aforementioned embodiment will be further described.

(1a) The buttons for moving on to other operations are included in the home screen, and the buttons are displayed along any one of upper, lower, left, and right ends such that the plurality of simple display regions can be displayed to be as large as possible since the simple display regions are displayed on the home screen.

(1b) It is possible to perform transition to an individual screen through selection of a switching button on the home screen or touching of the button.

(1c) Since there is one detailed display region on the individual screen, buttons are displayed along two end portions from among the upper, lower, left, and right end portions.

(1d) The home button for returning to the home screen and buttons for functions corresponding to the simple display regions on the home screen are displayed at one end out of the two ends in (1c) described above. In a case in which simple display regions for functions A, B, and C are displayed on the home screen, the home button and the buttons for the functions A, B, and C are displayed at one end portion of the individual screen.

(1e) It is possible to perform transition to an individual screen for functions of a button by pressing the button. However, in a case in which screens for the functions A, B, and C have been displayed on the home screen, and transition to an individual screen for the function A has been performed with a switching button for the function A, the display is not changed by pressing the button for the function A. If a button for the function B or C is pressed, it is possible to perform transition to the individual screen accordingly.

(1f) The height of the second button group on the individual screen is defined in accordance with an area ratio of the simple display regions on the home screen.

(1g) Since the simple display regions on the home screen and the detailed display regions for the same functions have different sizes, the numbers of available lower-order functions of the functions are different.

For example, it is possible to use lower-order functions such as "play", "stop", "next", and "back" in the simple display region on the home screen for the audio functions. It is also possible to use lower-order functions such as shuffle and source switching on the individual screen for the audio functions in addition to the lower-order functions that are available in the simple display region on the home screen.

With the air conditioner functions, it is possible to perform operations such as temperature adjustment and airflow amount adjustment on the home screen. Automatic and OFF functions, a seat heater, and the like are further displayed to be selectable on the individual screen.

With the telephone functions, it is possible to operate a call history on the home screen. It is further possible to operate a keypad and a contact list on the individual screen.

With the car navigation functions, it is possible to operate "going home" and "route cancel" on the home screen. It is further possible to select a wide range, a scale, and volume adjustment on the individual screen.

(1h) It is possible to change the positions of the buttons and display content on the home screen through long-press dragging and dropping.

As illustrated in (1a), it is possible to use the screen size to the maximum extent and to easily achieve transition to another function on the home screen including a plurality of screens by the buttons being displayed only at one end.

According to (1b), it is possible to easily achieve transition to the individual screen when needed. Since the transition from the home screen to the individual screen is not achieved without pressing the switching button, it is possible to use the plurality of simple display regions displayed on the home screen at the same time.

According to (1c) and (1d), it is possible to easily move from the individual screen to the home screen and to perform transition to the individual screens of the screens displayed on the home screen, which are considered to be used often.

Since all the icons of the screens displayed on the home screen in (1d) are displayed, and the screens after switching of display are also displayed as buttons, it is possible to easily recognize that the individual screen is being selected.

Note that in a case in which the screens for the functions A, B, and C have been displayed on the home screen and transition to the individual screen for the function A has been performed with the switching button for the function A, it is possible to display a plurality of screens and also to change (select) the screen sizes on the home screen as preconditions if there is no icon for the function A. Therefore, there is a disadvantage that it is difficult for an unfamiliar user, in particular, to recognize whether transition to the individual screen for the function A has been performed or whether only the sizes of the simple display regions for the function B and the function C are different on the home screen.

According to (1f), it is possible to know the configuration of the home screen on the individual screen as well.

Also, a home screen in which the number of screens is three and the screen size ratio is 1:1:1 or a home screen in which the number of screens is two and the screen size ratio is 2:1 or 1:2 is conceivable as the home screen. In that case, it is also possible to effectively use the screens when the number of screens is reduced from three to two.

In a case in which the sizes of the buttons satisfy 2:1, 2:1 is also satisfied on the home screen as well.

Therefore, in a case in which the screen size ratio is 2:1, the smaller screen corresponds to the car navigation functions, and if it is desired to use the car navigation functions, it is possible to move on to the individual screen for the car navigation functions by pressing the button since the screen size is small back on the home screen.

On the other hand, in a case in which the screen size ratio is 2:1 and it is possible to easily operate functions in the smaller screen even if it is not displayed as a large screen, it is possible to perform the operation on the small screen by pressing the home button without pressing the button. Since the home screen has already been displayed, there is no need to return to the home or the like through an operation on the home button.

When it is desired to move on to the next operation, it is possible to visually check whether the size of the simple display region on the home screen is sufficient or whether it is necessary to perform switching to the individual screen in advance.

According to (1g), it is possible to use necessary minimum functions even if the screen size is small.

According to (1h), it is possible to improve visibility in accordance with user's preference and to improve operability.

It is possible to further increase the screen size at the ordinary time (when a hand has not approached the touch panel) by adapting the buttons to be displayed only when the touch panel is touched or a hand approaches the touch panel.

Display indicating that switching to the individual screen has already been performed may be performed when a button for a function after switching to the individual screen for certain functions is touched to make it easy to recognize that the screen is not the home screen.

In regard to (1a) to (1h), it is possible to reduce an arithmetic operation load by not performing unnecessary arithmetic operations as a result of reduction of unnecessary processing of the program as follows.
- It is easy to perform transition to the home screen and the individual screen.
- It is possible to easily visually check a difference between the individual screen and the home screen, and unnecessary operations are reduced.
- Since the size ratio on the home screen can be known on the individual screen, it is possible to visually determine which of the home screen and the setting screen for changing the screen size the screen as a target of next transition is, and unnecessary operations are reduced.
- The same icons as those on the individual screen cannot be selected.
- Operation errors are reduced by increasing the screen size.

(2a) All the buttons in the screens displayed on the home screen and the home button for transition to the home screen are displayed on the individual screen, and the size ratio of the buttons is the same as the size ratio of the plurality of simple display regions displayed on the home screen.

(2b) It is possible to perform function operations on the home screen and the individual screen.

(2c) If the number of simple display regions on the home screen and the size of each region are changed, then the number and sizes of the buttons on the individual screen are also automatically changed correspondingly.

(2d) The ratio of the sizes of the buttons is the same ratio as the area ratio on the home screen.

(2e) The ratio of the sizes of the buttons is the same as the ratio of the screen with a larger difference in vertical and horizontal length ratio on the home screen (in a case in which the heights on the home screen change).

(2f) The buttons and the home button are arranged at a left or right end in the order from the home button to the plurality of the buttons from the upper side. The display order of the plurality of buttons from the upper side to the lower side is the same as the order of the plurality of simple display regions displayed on the home screen from the left side to the right side.

(2g) The buttons for the individual functions and the home button are displayed on the driver side. They are displayed on the right side of the display for a right steering wheel.

(2h) The sizes of the buttons for the individual functions and the home button are the same in the horizontal direction, and the sizes of the buttons are changed by heights.

(2i) On the individual screen, a plurality of buttons (first button group) for transition to other functions are vertically included in a line and are arranged on the side opposite to the icons (second button group) and the home button.

(2j) A switching button is included at the upper right corner of each simple display region on the home screen, and it is possible to perform transition to the individual screen for functions of each screen by selecting the switching button.

In a case in which transition from the home screen to the individual screen is performed, it is not possible to select icons (second button group) related to the individual screen, and it is possible to perform transition to individual screens of the other icons by selecting the icons.

In a case in which transition to the individual screen for the function A from among the functions A, B, and C on the home screen has been performed, nothing happens if the button for the function A is pressed on the individual screen for the function A. Transition to the individual screens is performed by touching the buttons for the functions B and C.

(2k) One side, two facing sides, or all the sides of each simple display region on the home screen are colored with different colors (the reference signs CL1, CL2, and CL3 in Figure 1) for each simple display region, and the icons for the individual screens are displayed with the colors (the reference signs CL1, CL2, and CL3 in Figure 2) associated with the simple display regions, respectively. The reference signs CL1 to CL3 in Figure 1 and the reference signs CL1 to CL3 in Figure 2 indicate that the displayed colors are the same, respectively.

(2l) All the plurality of screens and buttons on the home screen are for different functions.

According to (2a), it is possible to recognize the configuration of the home screen even on the individual screen.

(2b) Since it is possible to know how large the screen sizes are on the home screen on the basis of the ratio of the icons, it is possible to immediately understand which of the home screen and the individual screen the transition has to be performed to, in regard to the function to be operated.

In a case in which the sizes of the icons satisfy 2:1, 2:1 is also satisfied on the home screen.

(2c) Although the sizes and the number on the home screen can be selected by the user, it is not necessary for the user to reset the individual screen when the sizes and the number are changed, and it is possible to expect the above effects of (2a) and the like.

(2d) It is easy to have a sense of sizes. In a case in which the height of each screen size on the home screen is the same, the ratio of the horizontal lengths is the ratio of the sizes of the icons, and it is thus possible to make it easy to have the sense of sizes even if the ratio is expressed by changing the ratio of the vertical widths with the horizontal widths of the icons fixed.

(2e) Since a visual change increases as the vertical and horizontal ratio increases, it is easy to understand icon display.

If the horizontal widths are fixed when the icons are vertically aligned, the ratio on the home screen is expressed by the vertical widths, and it is easy to have a sense of sizes because of one-side expression, that is, each icon is expressed by the ratio of one vertical side, and the home screen is also expressed by the ratio of one vertical/horizontal side.

(2f) Since the home button is often used, it is displayed at the top to be noticeable and to facilitate the operation.

Also, since letters horizontally written are read from the left side to the right side and letters vertically written are read from the upper side to the lower side in general, it is possible to make it easy to understand the positional relationship on the home screen at the time of icon display.

(2g) It is possible to improve convenience by arranging the home button on the driver side since the home button is often used and in order to make it easy to operate the home button even during driving.

Since it is possible to provide easy understanding if the positional relationship in the first button group for the home screen and the individual screen is not changed, the second button group and the home button are arranged on the side opposite to the first button group.

(2h) It is possible to prevent the display of the individual screen from being reduced in size by changing the icon ratio.

Although it is also possible to prevent the display of the individual screen from being reduced in size by reducing the smaller icon in the horizontal direction with the horizontal width of the larger icon fixed, the small display leads to poor visibility and operability, and it is thus possible to eliminate such disadvantages.

(2i) Although the likelihood of operation mistakes increases if the first button group and the second button group are located close to each other, it is possible to eliminate such a likelihood.

It is possible to arrange the detailed display region on the individual screen at the center by displaying the first button group separately from the home button and the second button group on the opposite sides, and thereby to improve an appearance.

In a case in which the display is horizontally long, arrangement along the upper ends and the lower ends leads to a poor appearance since the detailed display region looks further collapsed, and it is possible to avoid such a disadvantage.

(2j) It is possible to perform an operation of switching the functions on the home screen.

It is possible to provide easy understanding if letters, drawings, or the like representing operations are displayed on the lower side or upper side of the operation buttons in general when an operation is performed on the screen, the likelihood that a switching button is erroneously pressed at the time of the operation decreases, and it does not interrupt.

Although there may be a case in which a hand moves in the downward direction for navigation or the like when an operation is performed on the touch panel, and there may also be a case in which the hand moves in the upward direction, fingers are unlikely to be moved up to the upper end, and it is possible to reduce operation errors of the switching button.

Selecting an icon after switching display of the home screen is performed when an erroneous operation is performed, and it is thus possible to unnecessarily change the display and the like at that time.

Although it is also possible to perform display indicating an error by pressing an icon or to perform display to show the individual screen for the icon again, no operation can be performed in that case, a waste time occurs, and it is thus possible to prevent such a situation.

(2k) It is possible to make it easier to understand what the icons represent by associating the screens on the home screen and the icons not only by display of letters or pictures on the icons, but also by color.

(2l) Since the functions on the home screen can be selected through the icons on the individual screen, it is possible to achieve transition through selection from as many functions displayed as possible.

The screens displayed on the home screen have an upper limit number, and in a case in which the number of displayed screens set on the home screen is reduced, functions of the screen that is not displayed next time on the home screen may be automatically displayed as a button. It is possible to omit an effort for resetting, as a button, a function on the home screen that is often used or that is considered to have been often used.

In regard to (2a) to (2l), it is possible to reduce an arithmetic operation load by not performing unnecessary arithmetic operations as a result of reduction of unnecessary processing of the program as follows.
- Since the size ratio on the home screen is known on the individual screen, it is possible to visually determine which of the home screen and the setting screen for changing the screen size the screen as a target of next transition is, and unnecessary operations are reduced.
- It is not necessary to reset the individual screen by changing the sizes and the number on the home screen.
- Operation errors are reduced by appropriately setting the positions and the sizes of the buttons.

In regard to the modes described hitherto, the following supplements will be disclosed.

### Supplement 1

An automotive display which has a plurality of available functions and is able to perform switching between a home screen and an individual screen, in which the plurality of functions include a first function group and a second function group, a first button group including a plurality of buttons respectively corresponding to a plurality of functions included in the first function group is displayed on the home screen, and if any of the plurality of buttons included in the first button group is operated, switching to the individual screen including a detailed display region of a function corresponding to the button is performed, a plurality of simple display regions respectively corresponding to a plurality of functions included in the second function group are further displayed on the home screen, and a switching button for performing switching to the individual screen including a detailed display region of the function is displayed in each of the plurality of simple display regions; the detailed display region, a home button for performing switching to the home screen, the first button group, and a second button group including a plurality of buttons respectively corresponding to a plurality of functions included in the second function group are displayed on the individual screen, and if any of the plurality of buttons included in the second button group is operated, switching to the individual screen including a detailed display region of a function corresponding to the button is performed, the number and sizes of the plurality of simple display regions displayed on the home screen and a function corresponding to each simple display region are able to be selectively designated, and a ratio of sizes of the plurality of buttons included in the second button group displayed on the individual screen is the same as a ratio of sizes of the plurality of simple display regions displayed on the home screen.

### Effects of Supplement 1

It is possible to recognize, on the individual screen, the configuration and the screen ratio of the home screen. It is easy to have the sense of the screen sizes on the home screen because of the buttons.

It is possible to recognize, even on the individual screen, whether it is better to change the sizes, the types, and the like on the home screen and to thereby easily chose an option of returning to the home screen once or an option of moving on to another individual screen as it is. It is possible to eliminate efforts to perform an operation occurring when it is not possible to recognize, on the individual screen, the configuration of the home screen.

In a case in which the height of each simple display region on the home screen is the same, the ratio of the width of each simple display region is equal to the ratio of the sizes of the buttons. Therefore, it is possible to change the ratio of the heights of the buttons in accordance with the width of each simple display region in a case in which the buttons are vertically aligned, by fixing the widths of the buttons. In other words, it is possible to perceive the sizes of the simple display regions on the home screen on the basis of the ratio of the heights of the buttons on the individual screen. Note that since there is no need to change the widths of the buttons, it is possible to secure the width of the detailed display region on the individual screen.

### Supplement 2

The automotive display according to Supplement 1, in which the second button group is arranged in an up-down direction along a left side or a right side of the automotive display, widths of the plurality of buttons included in the second button group are defined in advance, and a ratio of heights of the plurality of buttons included in the second button group is defined in accordance with an area ratio of the plurality of simple display regions displayed on the home screen.

### Effects of Supplement 2

It is possible to change the size for each button included in the second button group while securing the width of the detailed display region on the individual screen.

Although there is a likelihood that the width of the detailed display region on the individual screen decreases if the widths of the buttons are changed, it is possible to avoid such a situation. It is possible to secure the width of the detailed display region on the individual screen while enhancing visibility of the buttons for the user and to maintain functionality of the individual screen while enhancing convenience of the buttons for the user.

Although it is also possible to prevent the display of the individual screen from being further reduced in size by fixing the width of the button with a relatively large size and by reducing the width of the button with a relatively small size, the small size leads to poor visibility and operability, and it is thus possible to eliminate such a disadvantage.

A button with a relatively large size or a button arranged at the upper part of the individual screen is defined as a first button. Also, a button with a relatively small size or a button located below the first button is defined as a second button. Additionally, in a case in which there are three or more buttons present in the second button group, the buttons are defined in order such as a first button, a second button, and a third button. Each button is arranged in the up-down direction along the left side or the right side of the screen in a descending order of the areas like the first button, the second button, and then the third button. Furthermore, the first button, the second button, and the third button are arranged from the upper side to the lower side of the screen.

### Supplement 3

The automotive display according to Supplement 1 or 2, in which if the sizes or the number of the simple display regions on the home screen is changed, the area ratio or the number of the buttons on the individual screen is changed.

### Effects of Supplement 3

The sizes and the number of the simple display regions can be selected by the user on the home screen, and it is possible to expect the aforementioned effects regardless of the fact that there is no need for the user to reset the individual screen when the sizes and the number are changed.

### Supplement 4

The automotive display according to any one of Supplements 1 to 3, in which a switching button that is able to perform switching to the individual screen of a function corresponding to each of the simple display regions is displayed at an upper right corner of the simple display region on the home screen, and the functions included in the second function group are available on each of the home screen and the individual screen.

### Effects of Supplement 4

Since it is possible to perceive the sizes on the home screen on the basis of the ratio of the buttons, it is possible to quickly determine which of the home screen and the individual screen the transition has to be performed to in regard to a used function.

In a case in which the sizes of two buttons satisfy 2:1, the sizes of the simple display regions on the home screen also satisfy 2: 1.

Therefore, if the simple display region with a relatively small size is for car navigation functions, it is possible to perform transition to the individual screen with a relatively large size through an operation of a button since the size is small back in the home screen.

Also, in a case of a function that can be easily used without a large screen, it is possible to use the function on the home screen including a small region therefor by pressing the home button rather than a button corresponding to the function. There is no need to return to the home screen by operating the home button again after the function is used since the home screen has already been displayed, which is convenient.

In other words, it is possible to visually determine, on the current individual screen, whether the size of the simple display region displayed on the home screen is sufficient or whether it is necessary to move on to the individual screen in advance when it is desired to move on to utilization of the next function.

Although it is possible to provide easier understanding if letters, drawings, or the like representing functions thereof are displayed on the upper sides of the operation buttons in the screen in general when an operation is performed on the screen, the likelihood that a switching button is erroneously pressed at the time of the operation decreases, and it does not interrupt.

Although there may be a case in which a hand moves in the downward direction for navigation or the like when an operation is performed on the touch panel, and there may also be a case in which the hand moves in the upward direction, fingers are hardly moved up to the upper end, and it is possible to reduce operation errors of the switching button.

In regard to audio functions for example, it is possible to provide easier understanding if play, stop, next, and back buttons and the like are displayed on the lower side, while figures in regard to audio are displayed on the upper side than the buttons on the upper side and the figures on the lower side.

Since the buttons are located on the lower side, the likelihood that an enlarging button (switching button) at the upper corner is erroneously pressed when the buttons are operated or the like is reduced. Fingers are hardly moved until they come into contact with the enlarging button (switching button) at the upper corner when a navigation operation is performed as well, and the likelihood that the enlarging button is pressed despite an intention to perform another operation is reduced.

### [Reference Signs List]

- HS1 to HS3: Home screen
- S11 to S13: Simple display region
- B14 to B18: Button
- KS1 to KS5: Individual screen
- D14, D23: Detailed display region
- B11 to B13: Button
- 1: Automotive display
- 21: Input receiving unit
- 22: Display control unit

## Claims

1. An automotive display (13) having a plurality of available functions and being able to perform switching between a home screen (HS1 - HS3) and an individual screen (KS1- KS5), wherein
the plurality of functions includes a first function group and a second function group,
a first button group including a plurality of buttons (B11 - B13) respectively corresponding to a plurality of functions included in the first function group is displayed on the home screen, and if any of the plurality of buttons included in the first button group is operated, switching to the individual screen including a detailed display region (D14, D23) of a function corresponding to the button is performed,
a plurality of simple display regions (S11 - S13) respectively corresponding to a plurality of functions included in the second function group are further displayed on the home screen, **characterized by** a switching button for performing switching to the individual screen including a detailed display region of the function is displayed in each of the plurality of simple display regions,
the detailed display region, a home button for performing switching to the home screen, the first button group, and a second button group including a plurality of buttons (B14 - B18) respectively corresponding to a plurality of functions included in the second function group are displayed on the individual screen, and if any of the plurality of buttons included in the second button group is operated, switching to the individual screen including a detailed display region of a function corresponding to the button is performed,
the number and sizes of the plurality of simple display regions displayed on the home screen and a function corresponding to each simple display region are able to be selectively designated, and
a ratio of sizes of the plurality of buttons included in the second button group displayed on the individual screen is the same as a ratio of sizes of the plurality of simple display regions displayed on the home screen.

2. The automotive display as claimed in claim 1, wherein
the second button group is arranged in an up-down direction along a left side or a right side of the automotive display,
widths of the plurality of buttons included in the second button group are defined in advance, and
a ratio of heights of the plurality of buttons included in the second button group is defined in accordance with an area ratio of the plurality of simple display regions displayed on the home screen.

3. The automotive display as claimed in claim 1 or 2, wherein if the sizes or the number of the simple display regions on the home screen is changed, the area ratio or the number of the buttons on the individual screen is changed.

4. The automotive display as claimed in any one of claims 1 to 3, wherein
a switching button that is able to perform switching to the individual screen of a function corresponding to each of the simple display regions is displayed at an upper right corner of the simple display region on the home screen, and
the functions included in the second function group are available on each of the home screen and the individual screen.

## Patentansprüche

1. Anzeige (13) für Kraftfahrzeuge, die eine Vielzahl verfügbarer Funktionen aufweist und zwischen einem Startbildschirm (HS1-HS3) und einem Einzelbildschirm (KS1-KS5) umschalten kann, wobei
die Vielzahl von Funktionen eine erste Funktionsgruppe und eine zweite Funktionsgruppe beinhaltet,
auf dem Startbildschirm eine erste Schaltflächengruppe angezeigt wird, die eine Vielzahl von Schaltflächen (B11-B13) beinhaltet, die jeweils einer Vielzahl von in der ersten Funktionsgruppe beinhalteten Funktionen entsprechen, und bei Betätigung einer beliebigen der Vielzahl von Schaltflächen, die in der ersten Schaltflächengruppe beinhaltet ist, auf den Einzelbildschirm umgeschaltet wird, der einen detaillierten Anzeigebereich (D14, D23) einer Funktion beinhaltet, die der Schaltfläche entspricht, auf dem Startbildschirm ferner eine Vielzahl von einfachen Anzeigebereichen (S11-S13) angezeigt wird, die jeweils einer Vielzahl von in der zweiten Funktionsgruppe beinhalteten Funktionen entsprechen,
**dadurch gekennzeichnet, dass**
in jedem der Vielzahl von einfachen Anzeigebereichen eine Umschaltschaltfläche zum Umschalten auf den Einzelbildschirm angezeigt wird, der einen detaillierten Anzeigebereich der Funktion beinhaltet,
auf dem Einzelbildschirm der detaillierte Anzeigebereich, eine Startschaltfläche zum Umschalten auf den Startbildschirm, die erste Schaltflächengruppe und eine zweite Schaltflächengruppe, die eine Vielzahl von Schaltflächen (B14-B18) beinhaltet, die jeweils einer Vielzahl der in der zweiten Funktionsgruppe beinhalteten Funktionen entsprechen, angezeigt werden und bei Betätigung einer beliebigen der Vielzahl von Schaltflächen, die in der zweiten Schaltflächengruppe beinhaltet sind, auf den Einzelbildschirm umgeschaltet wird, der einen detaillierten Anzeigebereich einer Funktion beinhaltet, die der Schaltfläche entspricht,
die Anzahl und Größe der Vielzahl von einfachen Anzeigebereichen, die auf dem Startbildschirm angezeigt werden, und eine Funktion, die jedem einfachen Anzeigebereich entspricht, selektiv bezeichnet werden können und
ein Größenverhältnis der in der zweiten Schaltflächengruppe beinhalteten Vielzahl von Schaltflächen, die auf dem Einzelbildschirm angezeigt wird, gleich einem Größenverhältnis der Vielzahl von einfachen Anzeigebereichen ist, die auf dem Startbildschirm angezeigt wird.

2. Anzeige für Kraftfahrzeuge nach Anspruch 1, wobei
die zweite Schaltflächengruppe in Auf-Ab-Richtung entlang einer linken oder rechten Seite der Anzeige für Kraftfahrzeuge angeordnet ist,
die Breiten der Vielzahl von Schaltflächen, die in der zweiten Schaltflächengruppe beinhaltet sind, im Voraus definiert werden und
ein Höhenverhältnis der in der zweiten Schaltflächengruppe beinhalteten Vielzahl von Schaltflächen gemäß einem Flächenverhältnis der Vielzahl von einfachen Anzeigebereichen, die auf dem Startbildschirm angezeigt wird, definiert wird.

3. Anzeige für Kraftfahrzeuge nach Anspruch 1 oder 2, wobei bei einer Änderung der Größen oder der Anzahl der einfachen Anzeigebereiche auf dem Startbildschirm das Flächenverhältnis oder die Anzahl der Schaltflächen auf dem Einzelbildschirm geändert wird.

4. Anzeige für Kraftfahrzeuge nach einem der Ansprüche 1 bis 3, wobei
eine Umschaltschaltfläche, die auf den individuellen Bildschirm einer Funktion umschalten kann, die jedem der einfachen Anzeigebereiche entspricht, in einer oberen rechten Ecke des einfachen Anzeigebereichs auf dem Startbildschirm angezeigt wird und
die in der zweiten Funktionsgruppe beinhalteten Funktionen jeweils auf dem Startbildschirm und dem Einzelbildschirm verfügbar sind.

## Revendications

1. Dispositif d'affichage pour véhicule automobile (13) ayant une pluralité de fonctions disponibles et capable d'exécuter une commutation entre un écran d'accueil (HS1-HS3) et un écran individuel (KS1-KS5), dans lequel
la pluralité de fonctions comporte un premier groupe de fonctions et un second groupe de fonctions,
un premier groupe de boutons comportant une pluralité de boutons (B11-B13) correspondant respectivement à une pluralité de fonctions incluses dans le premier groupe de fonctions est affiché sur l'écran d'accueil, et si l'un quelconque de la pluralité de boutons inclus dans le premier groupe de boutons est actionné, une commutation à l'écran individuel comportant une région d'affichage détaillée (D14, D23) d'une fonction correspondant au bouton est exécutée,
une pluralité de régions d'affichage simple (S11-S13) correspondant respectivement à une pluralité de fonctions incluses dans le second groupe de fonctions sont en outre affichées sur l'écran d'accueil,
**caractérisé par**
un bouton de commutation pour exécuter une commutation vers l'écran individuel comportant une région d'affichage détaillée de la fonction qui est affichée dans chacune de la pluralité de régions d'affichage simple,
la région d'affichage détaillée, un bouton d'accueil permettant d'effectuer une commutation vers l'écran d'accueil, le premier groupe de boutons et un second groupe de boutons comportant une pluralité de boutons (B14-B18) correspondant respectivement à une pluralité de fonctions incluses dans le second groupe de fonctions sont affichés sur l'écran individuel, et si l'un quelconque de la pluralité de boutons inclus dans le second groupe de boutons est actionné, la commutation vers l'écran individuel comportant une région d'affichage détaillée d'une fonction correspondant au bouton est exécutée,
le nombre et les tailles de la pluralité de régions d'affichage simple affichées sur l'écran d'accueil et une fonction correspondant à chaque région d'affichage simple peuvent être désignés de manière sélective, et
un rapport de tailles de la pluralité de boutons inclus dans le second groupe de boutons affiché sur l'écran individuel est le même qu'un rapport de tailles de la pluralité de régions d'affichage simple sur l'écran d'accueil.

2. Dispositif d'affichage pour véhicule automobile selon la revendication 1, dans lequel
le second groupe de boutons est agencé dans une direction haut-bas le long d'un côté gauche ou d'un côté droit du dispositif d'affichage pour véhicule automobile,
des largeurs de la pluralité de boutons inclus dans le second groupe de boutons sont définies à l'avance, et
un rapport de hauteurs de la pluralité de boutons inclus dans le second groupe de boutons est défini en fonction d'un rapport de surface de la pluralité de régions d'affichage simple affichées sur l'écran d'accueil.

3. Dispositif d'affichage pour véhicule automobile selon la revendication 1 ou 2, dans lequel si les tailles ou le nombre des régions d'affichage simple sur l'écran d'accueil sont modifiés, le rapport de surface ou le nombre de boutons sur l'écran individuel est modifié.

4. Dispositif d'affichage pour véhicule automobile selon l'une quelconque des revendications 1 à 3, dans lequel
un bouton de commutation qui est capable d'exécuter une commutation vers l'écran individuel d'une fonction correspondant à chacune des régions d'affichage simple est affiché dans un coin supérieur droit de la région d'affichage simple sur l'écran d'accueil, et
les fonctions incluses dans le second groupe de fonctions sont disponibles sur chacun de l'écran d'accueil et de l'écran individuel.
